(19) Europäisches Patentamt
European Patent Office
Office européen des brevets

(11) EP 1 605 024 A1

(12) **EUROPEAN PATENT APPLICATION**

(43) Date of publication:
**14.12.2005 Bulletin 2005/50**

(51) Int Cl.7: **C09D 11/00**, B41M 5/00

(21) Application number: **05012127.6**

(22) Date of filing: **06.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **07.06.2004 JP 2004168269**

(71) Applicant: **FUJI PHOTO FILM CO., LTD.**
**Kanagawa 250-01 (JP)**

(72) Inventor: **Aoshima, Keitaro**
**Yoshida-cho Haibara-gun Shizuoka (JP)**

(74) Representative: **HOFFMANN EITLE**
**Patent- und Rechtsanwälte**
**Arabellastrasse 4**
**81925 München (DE)**

(54) **Particles, method for manufacturing the particles and ink composition**

(57) A method for manufacturing particles containing a coloring material and a polymer, the method comprising: dispersing a mixture of the coloring material and the polymer with beads for dispersion, so as to form fine particles; and heating the fine particles after removing the beads for dispersion, so as to increase particle sizes of the fine particles. And particles containing a coloring material and a polymer, wherein a redispersibility of the particles in a dispersion medium is in a range of from 50 to 100%, and an ink composition comprising the particles.

EP 1 605 024 A1

## Description

### Background of the Invention

1. Field of the Invention

The present invention relates to particles, a method for manufacturing the particles, and an ink composition.

2. Description of the Related Art

As image recording methods of forming an image on a medium to be recorded, e.g., paper, on the basis of image data signals, an electrophotographic system, a sublimation type and a melting type heat transfer system, and an ink jet system are used. The electrophotographic system requires a process of forming an electrostatic latent image on a photosensitive drum by charge and exposure, so that the system is complicated and the apparatus is expensive. The price of the apparatus is inexpensive as for the heat transfer system, but the system uses ink ribbons, so that it is high in running cost and leaves wastes. On the other hand, in the ink jet system, since the apparatus is inexpensive and an image is directly formed on a medium to be recorded by jetting inks on only a required image area, so that ink can be efficiently used and running cost is low. Further, the ink jet system is low in noise and excellent as an image recording system.

Ink jet recording systems include, for example, a system of jetting ink droplets by the pressure of vapor generated by the heat of an exothermic element, a system of jetting ink droplets by the mechanical pressure pulse generated by piezoelectric elements, and a system of jetting ink droplets containing charged particles by utilizing electrostatic field (refer to U.S. Patent 6,158,844, Japanese Patent 3315334). Methods of jetting ink droplets by vapor or mechanical pressure cannot control the flying direction of ink droplets and it is difficult to correctly land ink droplets on a desired point of a medium to be recorded on due to distortion of ink nozzles and convection of air.

On the other hand, since a method of using electrostatic field controls the flying direction of ink droplets by electrostatic field, it is possible to correctly land ink droplets on a desired point. Accordingly, this system is useful as image-formed matters (printed matters) of high quality can be produced.

As the ink composition to be used in ink jet recording using electrostatic field, an ink composition comprising a dispersion medium and charged particles containing at least a coloring material (refer to U.S. Patent 5,952,048, JP-A-8-291267 (the term "JP-A" as used herein refers to an "unexamined published Japanese patent application")) is used. An ink composition containing a coloring material can form inks of four colors of yellow, magenta, cyan and black by changing coloring materials, and further special color inks of gold and silver can be formed. Accordingly, this system is useful as color image-formed matters (printed matters) can be produced.

### Summary of the Invention

Ink compositions used in ink jet recording are generally manufactured by kneading a coloring material and a polymer with heating, pulverizing the kneaded product by a dry method to obtain particles, adding a dispersion medium and a dispersant thereto to make the particles finer and at the same time to disperse the fine particles in the dispersion medium, and further adding a charge adjustor to give electrical charge to the fine particles. However, related ink compositions manufactured in these processes have a problem that particles adhere to the nozzle of ink jet head (ejecting opening) of ink jet recording apparatus, which sometimes causes clogging. Further, the particles precipitate and are not redispersed even by stirring when these ink compositions are preserved for a long period of time, and the preservation stability of the ink compositions is not good.

Accordingly, the objects of the invention are to provide particles capable of solving the above problems, to provide a method for manufacturing the particles, and to provide an ink composition. More specifically, the objects of the invention are to provide particles that hardly adhere to the nozzle of ink jet head of ink jet recording apparatus by inhibiting the interaction functioning among particles and can also improve the preservation stability when used as the component of the composition of ink for ink jet recording, to provide a method for manufacturing the particles, and to provide an ink composition.

The invention is as follows.

(1) A method for manufacturing particles containing a coloring material and a polymer, the method comprising:

dispersing a mixture of the coloring material and the polymer with beads for dispersion, so as to form fine particles; and
heating the fine particles after removing the beads for dispersion, so as to increase particle sizes of the fine

particles.

(2) The method for manufacturing particles as described in (1) above,

wherein a volume average particle size of the fine particles after finishing the dispersing is less than 0.7 μm, and a volume average particle size of the particles after finishing the heating is from 0.7 to 5.0 μm.

(3) The method for manufacturing particles as described in (1) above,

wherein a volume average particle size of the particles after finishing the heating is 1.2 times or more than a volume average particle size of the fine particles after finishing the dispersing.

(4) Particles containing a coloring material and a polymer,

wherein a redispersibility of the particles in a dispersion medium is in a range of from 50 to 100%.

(5) An ink composition comprising particles containing a coloring material and a polymer dispersed in a dispersion medium,

wherein a redispersibility of the particles in the dispersion medium is in a range of from 50 to 100%.

**Brief Description of the Drawings**

Fig. 1 is a general view typically showing an example of ink jet recording apparatus for use in the invention;
Fig. 2 is an oblique view showing the constitution of the ink jet head of ink jet recording apparatus for use in the invention (for simplification, the edge of the guard electrode at each ejecting part is not shown); and
Fig. 3 is a cross section of side view of Fig. 2 showing the state of the distribution of charged particles in the case where a plurality of ejecting parts of ink jet head are used (corresponding to the view X-X in Fig. 2).

**Detailed Description of the Invention**

The invention is described in detail below.

The particles manufactured according to the invention are useful particularly as the component of the composition of ink for ink jet recording, but the use of the particles manufactured according to the invention is not limited thereto. For example, a liquid developer for electrophotography and display elements for electronic paper and digital paper are exemplified.

The case where the particles manufactured according to the invention are used as the component of the composition of ink for ink jet recording, in particular for ink jet recording of ejecting charged particles by utilizing an electrostatic field, is described below. Such a composition is manufactured by dispersing a mixture comprising at least a coloring material and a polymer in a dispersion medium to obtain particles through a dispersing process and a heating process of the invention, and further adding a charge adjustor to give electrical charge to the particles. The uses of the particles manufactured according to the invention are not limited to the following description.

Dispersion medium:

A dispersion medium is preferably a dielectric liquid having high electrical resistivity, specifically $10^{10}$ Ω cm or higher. If a dispersion medium having low electrical resistivity is used, electrical continuity occurs between contiguous recording electrodes, so that such a dispersion medium is not preferred for the present invention. The dielectric constant of a dielectric liquid is preferably 5 or less, more preferably 4 or less, and still more preferably 3.5 or less. When the dielectric constant of a dielectric liquid is in this range, electric field effectively acts upon the charged particles in the dielectric liquid and preferred.

As the dispersion media for use in the invention, straight chain or branched aliphatic hydrocarbon, alicyclic hydrocarbon, aromatic hydrocarbon, halogen substitution products of these hydrocarbons, and silicone oil are exemplified. For example, hexane, heptane, octane, isooctane, decane, isodecane, decalin, nonane, dodecane, isododecane, cyclohexane, cyclooctane, cyclodecane, toluene, xylene, mesitylene, Isopar-C, Isopar-E, Isopar-G, Isopar-H, Isopar-L and Isopar-M (Isopar is the trade name of Exxon), Shellsol 70 and Shellsol 71 (Shellsol is the trade name of Shell Oil Co.), Amsco OMS and Amsco 460 solvents (Amsco is the trade name of Spirits Co.), and KF-96L (trade name, manufactured by Shin-Etsu Chemical Co., Ltd., Silicone Division) can be used alone or as a mixture. The content of dispersion medium in all the ink composition is preferably from 20 to 99 weight%. When the content of a dispersion medium is 20 weight% or more, particles containing a coloring material can be well dispersed in the dispersion medium, and 99 weight% or less can suffice the content of a coloring material.

Coloring material:

Well-known dyes and pigments can be used as the coloring materials in the invention, and they can be selected according to the use and the purpose. For example, from the viewpoint of the tone of image-recorded matters (printed matters), it is preferred to use pigments (for example, see Ganryo Bunsan Anteika to Hyomen Shori Gijutsu·Hyoka (Pigment Dispersion Stabilization and Techniques of Surface Treatment·Evaluation), First Edition, published by Gijutsu Joho Kyokai (Dec. 25, 2001). By changing coloring materials, inks of four colors of yellow, magenta, cyan and black can be formed. In particular, by using the pigments for use as offset printing inks and proofs, the same tone as the offset prints can be obtained and preferred.

As pigments for yellow inks, monoazo pigments, e.g., C.I. Pigment Yellow 1 and C.I. Pigment Yellow 74, disazo pigments, e.g., C.I. Pigment Yellow 12 and C.I. Pigment Yellow 17, non-benzidine series azo pigments, e.g., C.I. Pigment Yellow 180, azo lake pigments, e.g., C.I. Pigment Yellow 100, condensed azo pigments, e.g., C.I. Pigment Yellow 95, acid dye lake pigments, e.g., C.I. Pigment Yellow 115, basic dye lake pigments, e.g., C.I. Pigment Yellow 18, anthraquinone pigments, e.g., Flavanthrone Yellow, isoindolinone pigments, e.g., Isoindolinone Yellow 3RLT, quinophthalone pigments, e.g., Quinophthalone Yellow, isoindoline pigments, e.g., Isoindoline Yellow, nitroso pigments, e.g., C.I. Pigment Yellow 153, metal complex salt azomethine pigments, e.g., C.I. Pigment Yellow 117, and isoindolinone pigments, e.g., C.I. Pigment Yellow 139 are exemplified.

As pigments for magenta inks, monoazo pigments, e.g., C.I. Pigment Red 3, disazo pigments, e.g., C.I. Pigment Red 38, azo lake pigments, e.g., C.I. Pigment Red 53:1 and C.I. Pigment Red 57:1, condensed azo pigments, e.g., C.I. Pigment Red 144, acid dye lake pigments, e.g., C.I. Pigment Red 174, basic dye lake pigments, e.g., C.I. Pigment Red 81, anthraquinone pigments, e.g., C.I. Pigment Red 177, thioindigo 0pigments, e.g., C.I. Pigment Red 88, perinone pigments, e.g., C.I. Pigment Red 194, perylene pigments, e.g., C.I. Pigment Red 149, quinacridone pigments, e.g., C.I. Pigment Red 122, isoindolinone pigments, e.g., C.I. Pigment Red 180, and Alizarin lake pigments, e. g., C.I. Pigment Red 83 are exemplified.

As pigments for cyan inks, disazo pigments, e.g., C.I. Pigment Blue 25, phthalocyanine pigments, e.g., C.I. Pigment Blue 15, acid dye lake pigments, e.g., C.I. Pigment Blue 24, basic dye lake pigments, e.g., C.I. Pigment Blue 1, anthraquinone pigments, e. g. , C.I. Pigment Blue 60, and alkali blue pigments, e.g., C.I. Pigment Blue 18 are exemplified.

As pigments for black inks, organic pigments, e.g., aniline black pigments, and iron oxide pigments, and carbon black pigments, e.g., furnace black, lamp black, acetylene black and channel black are exemplified.

Further, processed pigments typified by Microlith Pigments, e.g., Microlith-A, -K and -T can also be preferably used. The specific examples thereof include Microlith Yellow 4G-A, Microlith Red BP-K, Microlith Blue 4G-T, and Microlith Black C-T.

Various kinds of pigments can be used according to necessity, e.g., as pigments for white inks, calcium carbonate and titanium oxide pigments, as pigments for silver inks, aluminum powders, and as pigments for golden inks, copper alloys are used.

It is preferred to use fundamentally one kind of pigment for one color from the point of the simplicity of manufacture of ink, but it is also preferred to use two or more pigments in combination in some cases for the purpose of adjusting the hue, such as the mixture of phthalocyanine with carbon black for black ink. Further, pigments may be subjected to surface treatment before use by well-known methods, e.g., rosin treatment (the above mentioned Ganryo Bunsan Anteika to Hyomen Shori Gijutsu·Hyoka).

The pigment content in all the ink composition is preferably from 0.1 to 50 weight%. The content of 0.1 weight% or more is sufficient as the pigment content and sufficiently good coloring can be obtained in the printed matters, and when the content is 50 weight% or less, particles containing coloring materials can be well dispersed in a dispersion medium. The pigment content is more preferably from 1 to 30 weight%.

Covering agent:

In the present invention, it is preferred that coloring materials such as pigments are dispersed (to be made particles) in a dispersion medium in the state of being covered with a covering agent rather than to be directly dispersed (to be made particles). By covering with a covering agent, the electric charge of the coloring material is masked and desired charge characteristics can be obtained. In the invention, after ink jet recording on a recording medium ("a recording medium" means a medium on which an image is recorded, such as paper and the like), the medium is subjected to fixation with a heating means such as a heat roller, and at this time the covering agent is melted by heat and fixation is efficiently effected.

As the examples of covering agents, e.g., rosins, rosin-modified phenol resin, alkyd resin, (meth)acrylic polymer, polyurethane, polyester, polyamide, polyethylene, polybutadiene, polystyrene, polyvinyl acetate, an acetal-modified product of polyvinyl alcohol, and polycarbonate are exemplified. Of these covering agents, from the easiness of

formation of particles, polymers having a weight average molecular weight of from 2,000 to 1,000,000, and the degree of polydispersion (weight average molecular weight/number average molecular weight) of from 1.0 to 5.0 are preferred. Further, from the easiness of fixation, polymers having any one of a softening point, a glass transition point and a melting point of from 40 to 120°C are preferred.

The polymers particularly preferably used in the invention as the covering agent are polymers containing at least any one of the constitutional units represented by the following formulae (1) to (4).

Formula (1) 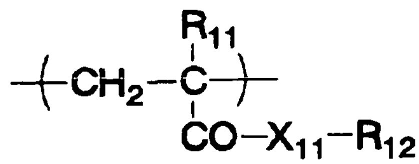

Formula (2) 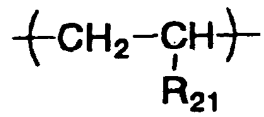

Formula (3) 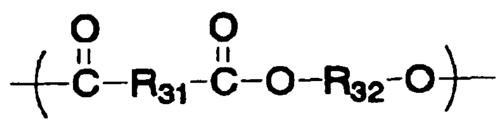

Formula (4) 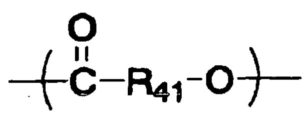

In the above formulae, $X_{11}$ represents an oxygen atom or-N($R_{13}$)-; $R_{11}$ represents a hydrogen atom or a methyl group; $R_{12}$ represents a hydrocarbon group having from 1 to 30 carbon atoms; $R_{13}$ represents a hydrogen atom or a hydrocarbon group having from 1 to 30 carbon atoms; $R_{21}$ represents a hydrogen atom or a hydrocarbon group having from 1 to 20 carbon atoms; and $R_{31}$, $R_{32}$ and $R_{41}$ each represents a divalent hydrocarbon group having from 1 to 20 carbon atoms; and the hydrocarbon groups represented by $R_{12}$, $R_{21}$, $R_{31}$, $R_{32}$ and $R_{41}$ may have an ether bond, an amino group, a hydroxyl group or a halogen substituent.

A polymer containing a constitutional unit represented by formula (1) can be obtained by radical polymerization of a corresponding radical polymerizable monomer by known methods. As the radical polymerizable monomers to be used, (meth) acrylic esters, e.g., methyl (meth)acrylate, ethyl (meth)acrylate, propyl (meth)acrylate, butyl (meth)acrylate, hexyl (meth)-acrylate, octyl (meth)acrylate, 2-ethylhexyl (meth)acrylate, dodecyl (meth)acrylate, stearyl (meth) acrylate, cyclohexyl (meth)acrylate, phenyl (meth)acrylate, benzyl (meth)acrylate, and 2-hydroxyethyl (meth)acrylate, and (meth)acrylamides, e.g., N-methyl(meth)acrylamide, N-propyl(meth)acrylamide, N-phenyl(meth)acrylamide, and N,N-dimethyl(meth)acrylamide are exemplified.

A polymer containing a constitutional unit represented by formula (2) can be obtained by radical polymerization of a corresponding radical polymerizable monomer by known methods. As the radical polymerizable monomers to be used, e.g., ethylene, propylene, butadiene, styrene and 4-methylstyrene are exemplified.

A polymer containing a constitutional unit represented by formula (3) can be obtained by dehydration condensation of a corresponding dicarboxylic acid, or acid anhydride and diol by known methods. As the dicarboxylic acids

to be used, succinic anhydride, adipic acid, sebacic acid, isophthalic acid, terephthalic acid, 1,4-phenylenediacetic acid and diglycolic acid are exemplified. As the diols to be used, ethylene glycol, 1,2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol, and diethylene glycol are exemplified.

A polymer containing a constitutional unit represented by formula (4) can be obtained by dehydration condensation of a corresponding carboxylic acid having a hydroxyl group by known methods, or ring opening polymerization of a cyclic ester of a corresponding carboxylic acid having a hydroxyl group by known methods. As the carboxylic acids having a hydroxyl group or cyclic esters thereof to be used, 6-hydroxyhexanoic acid, 11-hydroxyundecanoic acid, hydroxybenzoic acid, and ε-caprolactone are exemplified.

The polymers containing at least any one of the constitutional units represented by formulae (1) to (4) may be homopolymers of the constitutional units represented by formulae (1) to (4), or they may be copolymers with other constitutional units. These polymers may be used alone as the covering agents or two or more of these covering agents may be used in combination.

The covering agent content in the total ink composition is preferably from 0.1 to 40 weight%. The content of 0.1 weight% or more is sufficient as the covering agent content and sufficient fixation can be obtained, and when the content is 40 weight% or less, good particles containing a coloring material and a covering agent can be formed.

Dispersant:

In the invention, a mixture of a coloring material and a covering agent is dispersed (made particles) in a dispersion medium, and it is preferred to use a dispersant to inhibit particles from precipitating.

The examples of the dispersants include surfactants typified by sorbitan fatty acid esters, e.g., sorbitan monooleate, and polyethylene glycol fatty acid esters, e.g., polyoxyethylene distearate are exemplified. In addition, e.g., copolymers of styrene and maleic acid, and amine-modified products of the copolymers, copolymers of styrene and (meth)acrylic compounds, (meth)acrylic polymers, copolymers of polyethylene and (meth)acrylic compounds, rosin, BYK-160, 162, 164, 182 (polyurethane polymers, manufactured by BYK Chemie), EFKA-401 and 402 (acrylic polymers, manufactured by EFKA Co.), and Solspers 17000 and 24000 (polyester polymers, manufactured by Zeneca Agrochemicals Co., Ltd.) are exemplified. From the viewpoint of the long term storage stability of an ink composition, polymers having a weight average molecular weight of from 1,000 to 1,000,000, and the degree of polydispersion (weight average molecular weight/number average molecular weight) of from 1.0 to 7.0 are preferred. To use graft polymers or block polymers is most preferred.

The polymers particularly preferably used in the invention are graft polymers containing a polymer component comprising at least either one constitutional unit represented by the following formula (5) or (6), and a polymer component containing a constitutional unit represented by the following formula (7) at least as the graft chain.

Formula (5)

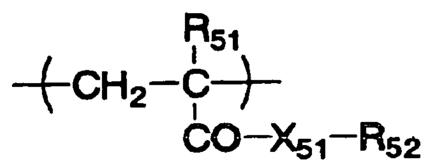

Formula (6)

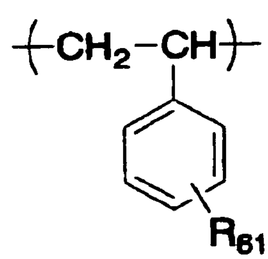

Formula (7) 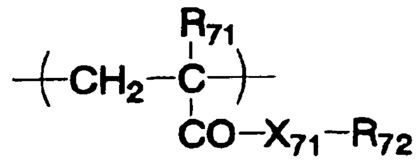

wherein $X_{51}$ represents an oxygen atom or $-N(R_{53})-$; $R_{51}$ represents a hydrogen atom or a methyl group; $R_{52}$ represents a hydrocarbon group having from 1 to 10 carbon atoms; $R_{53}$ represents a hydrogen atom or a hydrocarbon group having from 1 to 10 carbon atoms; $R_{61}$ represents a hydrogen atom, a hydrocarbon group having from 1 to 20 carbon atoms, a halogen atom, a hydroxyl group, or an alkoxyl group having from 1 to 20 carbon atoms; $X_{71}$ represents an oxygen atom or $-N(R_{73})-$; $R_{71}$ represents a hydrogen atom or a methyl group; $R_{72}$ represents a hydrocarbon group having from 4 to 30 carbon atoms; and $R_{73}$ represents a hydrogen atom or a hydrocarbon group having from 1 to 30 carbon atoms; and the hydrocarbon groups represented by $R_{52}$ and $R_{72}$ may contain an ether bond, an amino group, a hydroxyl group or a halogen substituent.

The above graft polymer can be obtained by polymerizing a radical polymerizable monomer represented by formula (7) preferably in the presence of a chain transfer agent, introducing a polymerizable functional group to the terminals of the obtained polymer, and further copolymerizing with a radical polymerizable monomer represented by formula (5) or (6).

As the radical polymerizable monomers corresponding to formula (5), e.g., (meth)acrylic esters, e.g., methyl (meth)acrylate, ethyl (meth)acrylate, propyl (meth)acrylate, butyl (meth)acrylate, hexyl (meth)acrylate, cyclohexyl (meth)acrylate, phenyl (meth)acrylate, benzyl (meth)acrylate, and 2-hydroxyethyl (meth)acrylate, and (meth)acrylamides, e.g., N-methyl(meth)acrylamide, N-propyl(meth)acrylamide, N-phenyl(meth)acrylamide, and N,N-dimethyl (meth)acrylamide are exemplified.

As the radical polymerizable monomers corresponding to formula (6), e.g., styrene, 4-methylstyrene, chlorostyrene and methoxystyrene are exemplified.

As the radical polymerizable monomers corresponding to formula (6), e.g., hexyl (meth) acrylate, octyl (meth) acrylate, 2-ethylhexyl (meth)acrylate, dodecyl (meth)acrylate and stearyl (meth)acrylate are exemplified.

As the specific examples of these graft polymers, the polymers represented by the following formulae are exemplified.

[BZ-1] 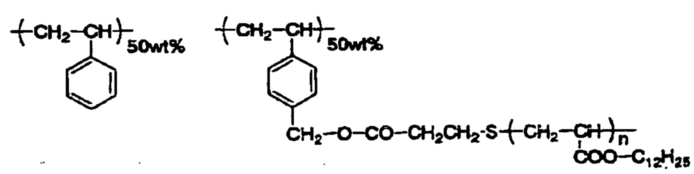

[BZ-2] 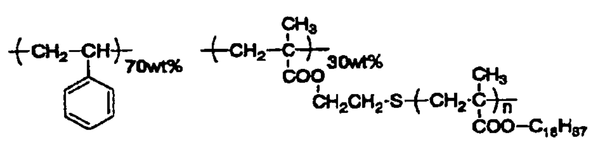

[BZ-3] 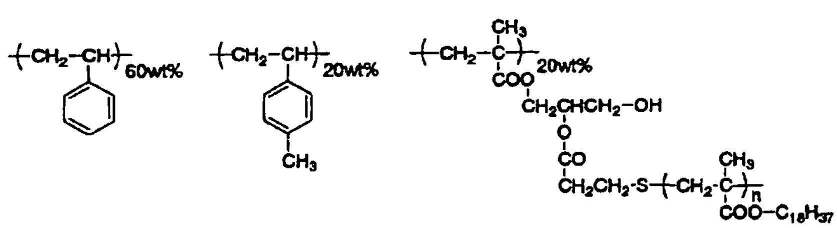

[BZ−4] 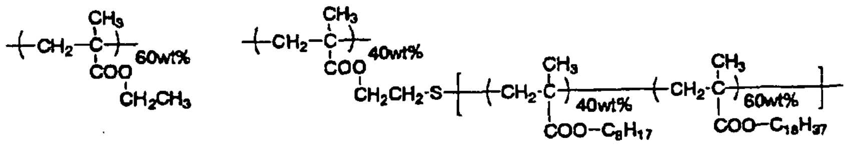

[BZ−5] 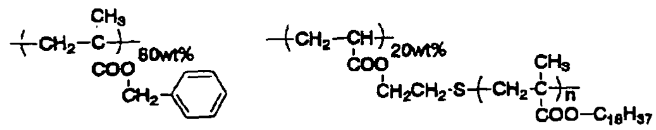

[BZ−6] 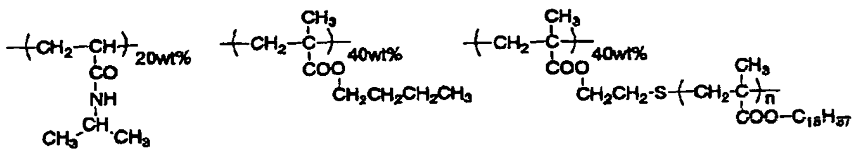

The graft polymers containing a polymer component comprising at least either one constitutional unit represented by formula (5) or (6), and a polymer component containing a constitutional unit represented by formula (7) at least as the graft chain may contain a constitutional unit represented by formula (5) and/or (6), and a constitutional unit represented by formula (7) alone, or may contain other constitutional unit. The preferred composition ratio of the polymer component having a graft chain to other polymer component is from 10/90 to 90/10. When the composition ratio is in this range, a good particle forming property can be obtained, so that a desired particle size is liable to be obtained and preferred. These polymers may be used alone as a dispersant, or two or more polymers may be used in combination.
The content of a dispersant in the total ink composition is preferably from 0.01 to 30 weight%. When the content of a dispersant is in this range, a good particle forming property can be obtained, so that a desired particle size can be obtained.

Charge adjustor:

In the invention, it is further preferred to use a charge adjustor in combination for controlling the charge quantity of particles.
As preferred charge adjustors, metal salt of organic carboxylic acid, e.g., zirconium naphthenate and zirconium octanoate, ammonium salt of organic carboxylic acid, e.g., tetramethylammonium stearate, metal salt of organic sulfonic acid, e.g., sodium dodecylbenzenesulfonate and magnesium dioctylsulfosuccinate, ammonium salt of organic sulfonic acid, e.g., tetrabutylammonium toluenesulfonate, a polymer having a carboxylic acid group on the side chain, e.g., a polymer having a carboxylic acid group obtained by modifying a copolymer of styrene and maleic anhydride with amine, etc., a polymer having a carboxylate anionic group on the side chain, e.g., a copolymer of stearyl methacrylate and tetramethylammonium methacrylate, etc., a polymer having a nitrogen atom on the side chain, e.g., a copolymer of styrene and vinylpyridine, etc., and a polymer having an ammonium group on the side chain, e.g., a copolymer of butyl methacrylate and N-(2-methacryloyloxyethyl)-N,N,N-trimethylammoniumtosylate, etc., are exemplified. The electric charge given to particles may be positive charge or negative charge. The content of a charge adjustor in the total ink composition is preferably from 0.0001 to 10 weight%.

Other components:

Further, antibacterial agents for preventing rottenness and surfactants for controlling the surface tension can be used in the invention, according to purpose.
A dispersing process in the invention is described below.
The dispersing process is a process of dispersing a mixture of a coloring material and a polymer (a covering agent) with beads for dispersion to make fine particles. As beads for dispersion, steel beads, glass beads, and ceramic beads, e.g., zirconia, titania, alumina and silicon nitride are used. The particle size of beads is preferably from 0.05 to

5 mm, more preferably from 0.1 to 3 mm. For forming desired fine particles, the dispersing process may be performed a plurality of times by changing the kind and particle size of the beads for dispersion.

Apparatus such as a kneader, a dissolver, a mixer, a high speed disperser, a sand mill, a roll mill, a ball mill, an attritor, and a beads mill (see the above mentioned Ganryo Bunsan Anteika to Hyomen Shori Gijutsu·Hyoka) are used for dispersion.

The temperature of the dispersing process is preferably lower than the glass transition temperature and the softening point of a polymer. The time of the dispersing process is preferably from 30 minutes to 10 hours. The fine particles thus obtained after dispersing process preferably have a volume average particle size of less than 0.7 μm, preferably from 0.1 to 0.65 μm. The particle size of the fine particles is smaller than the aiming desired particle size.

A mixture of a coloring material and a polymer can be obtained by blending both components by a dry method and the above dispersing apparatus are used for the blending. The ratio of long particle size/short particle size of the powder particles obtained by a dry method is preferably from 1 to 5. Further, the ratio of volume average particle size/number average particle size is preferably 10 or less.

After finishing the dispersing process, the beads for dispersion are removed, and then a heating process of heating the obtained fine particles is performed to increase the particle size of the fine particles.

The heating temperature in the heating process is preferably higher than the glass transition temperature and the softening point of a polymer, and it may be selected optionally, but a preferred temperature is, e.g., from 35 to 120°C. The time of the heating process is preferably from 30 minutes to 10 hours. The volume average particle size of the thus-obtained particles after finishing the heating process is preferably from 0.7 to 5.0 μm, more preferably from 0.7 to 3.0 μm. Further, the volume average particle size of the particles after finishing the heating process is 1.2 times or more, more preferably 1.5 times or more, than the volume average particle size of the fine particles after finishing the dispersing process. Particles having a desired particle size are obtained according to the heating process.

The volume average particle size of particles can be measured, for example, by a centrifugal precipitation method with an apparatus, e.g., ultracentrifugal automatic particle size distribution-measuring apparatus CAPA-700 (manufactured by HORIBA LTD.). The volume average particle size of particles can be adjusted by the kind and addition amount of a dispersant and apparatus used for dispersion.

As described above, related ink compositions are manufactured by kneading a coloring material and a polymer with heating, pulverizing the kneaded product by a dry method to obtain particles, adding a dispersion medium and a dispersant thereto to make the particles finer and at the same time to disperse the fine particles in the dispersion medium, and further adding a charge adjustor to give electrical charge to the fine particles, but related ink compositions have a problem that particles adhere to the nozzle of ink jet head of ink jet recording apparatus, which sometimes causes clogging. Further, the particles precipitate and are not redispersed even by stirring when these ink compositions are preserved for a long period of time, and the preservation stability of the ink compositions is not good.

In the invention, particles having a smaller particle size than a desired size are formed in a dispersing process, and then the particle size is increased in a heating process to thereby obtain particles having a desired size. The pigment, i.e., the coloring material, is difficult to be bared on the surface of the particles by these processes, so that the interaction functioning among particles can be inhibited. Specifically, in fine particles formed by a dispersing process, the pigment is bared on the surface of the particles by the powerful works of the beads for dispersion, so that the interaction among particles is strong, as a result the particles are liable to adhere to the nozzle of ink jet head of ink jet recording apparatus and dry. Further, the particles are liable to agglomerate during preservation. However, in the invention, a polymer covers a pigment by a succeeding heating process, so that the pigment is hardly bared on the surface of the particles and the interaction functioning among particles can be inhibited, in addition the dry adhesion of the particles is difficult to occur and the agglomeration during preservation can also be reduced. When heating is performed in the dispersing process using beads for dispersion, covering of a pigment by a polymer is not effectual and a drawback such as the decomposition of the pigment arises.

A charge adjustor may be added in either the dispersing process or a heating process.

The redispersibility in a dispersion medium of the particles of the invention manufactured according to the above manufacturing method is in the range of from 50 to 100%, preferably from 70 to 100%. Accordingly, the redispersibility in a dispersion medium of an ink composition obtained by dispersing the particles of the invention in a dispersion medium is in the range of from 50 to 100%, preferably from 70 to 100%.

Redispersibility in the invention means as follows: That is, when a composition containing particles and a dispersion medium is dried, the dispersion medium is evaporated to obtain a solid, and a dispersion medium is added to the solid to redisperse (dissolve) the solid, the weight% of the solid redispersed at this time means redispersibility in the invention, and the redispersibility is a value measured by the following measuring method. Hereafter, a dispersion medium used for the measurement of redispersibility is the same as a dispersion medium contained in a dispersed composition. For example, when Isopar G is contained as a dispersion medium Isopar G is used for the measurement of redispersibility.

Specific measuring method of redispersibility:

Ten (10) grams of a composition is spread in a Petri dish and naturally dried at room temperature (the drying time is 1 hour when Isopar G is used as a dispersant) to thereby obtain a solid.
Ten (10) grams of a dispersant is added to the obtained solid, followed by standing for 30 minutes at room temperature.
The mixture is filtered through a nylon filter of 42 μm meshes.
The residue on the nylon filter is naturally dried at room temperature.
The redispersibility is computed according to the following equation.

$$[\text{(The weight of the solid - the weight of the residue) /the weight of the solid}] \times 100\ (\%)$$

As the ink composition for use in the invention, it is preferred to prepare an ink composition for initial charge and an ink composition for replenishment and replenish the ink composition for replenishment to supply the reduction in concentration of particles due to the ejection of the ink composition for initial charge, and at the same time, make the concentration of the solids content of the replenishment ink composition higher than that of the ink composition for initial charge.
The concentrations of the solids contents of an ink composition for initial charge and a replenishing ink composition are not particularly restricted, but it is preferred that the concentration of the solids content of an ink composition for initial charge be from 1 to 40 weight%, the concentration of a replenishment ink composition from 2 to 60 weight%, and the ratio of the concentrations of the solids contents of an ink composition for initial charge and a replenishment ink composition of the latter/the former ratio be set at 1.05 to 10.0, more preferably from 1.1 to 7.0. By satisfying these conditions, a good ejecting characteristic can be obtained, and the mixing failure of the ink composition for initial charge and the replenishment ink composition does not occur. The preferred solids content concentration of an ink composition for initial charge is from 3 to 30 weight%, and that of a replenishment ink composition is from 5 to 50 weight%.
The concentration of the solids content can be computed on the basis of the weight change by heating an ink composition to remove the volatile content, e.g., it can be computed on the basis of the weight change by drying an ink composition on a hot plate at 145°C for 2 hours.
In the invention, the electric conductivity at 20°C of an ink composition for initial charge is preferably from 10 to 50,000 pS/cm (from 1 to 5,000 nS/m), and that of an ink composition for replenishment is preferably from 50 to 100, 000 pS/cm (from 1 to 10, 000 nS/m). When the electric conductivity of an ink composition is in this range, a good ejecting characteristic can be obtained. By making the electric conductivity of a replenishment ink composition higher than that of an ink composition for initial charge, an ejecting characteristic can be maintained for long hours, so that more preferred. The electric conductivity of an ink composition can be adjusted by the kinds and the addition amounts of a dispersion medium and a charge adjustor to be used.
In the invention, the coefficient of viscosity of an ink composition at 20°C is preferably in the range of from 0.5 to 50 mPa·s. When the coefficient of viscosity is in this range, a good ejecting characteristic can be obtained. The coefficient of viscosity of an ink composition can be adjusted by the kinds and the addition amounts of a dispersion medium and polymer components, e.g., a dispersant, dissolved in the dispersion medium to be used. The coefficient of viscosity of an ink composition can also be adjusted by the use of a surfactant.

Ink jet recording apparatus:

The above ink composition is recorded on a recording medium by an ink jet recording system, and it is preferred in the invention to use an ink jet recording system utilizing electrostatic field. An ink jet recording system utilizing electrostatic field is a system of applying voltage between a control electrode and a back electrode in rear of a recording medium to whereby concentrate the charged particles of an ink composition at the jetting position by the electrostatic force, and jetting the ink composition from the jetting position to the recording medium. The voltage applied between a control electrode and a back electrode is such that, e.g., the control electrode is a positive electrode and the back electrode is a negative electrode when the charged particles are positively charged. The same effect can be obtained by charging a recording medium in place of applying voltage to a back electrode.
As an ink jet system, for example, a system of jetting ink from a needle-like tip such as an injector is known, and recording can be performed with the ink composition of the invention. However, the replenishment of charged particles after charged particles are concentrated and ejected is difficult, so that it is difficult to perform recording stably for a long period of time. When ink is circulated for forcedly replenishing charged particles, since a method for overflowing the ink from the tip of an injection needle is used, the shape of meniscus at the tip of the injection needle of ejection position is not stable, and stable recording is difficult, and so this system is suitable for short-term recording.

On the other hand, a method for circulating an ink composition without overflowing the ink composition from an ejecting opening is preferably used. For example, according to a system wherein ink is circulated in an ink chamber having an ejecting opening, a control electrode is formed around the ejecting opening, an ink guide is present in the ejecting opening, whose tip faces on the side of a recording medium, and the concentrated ink droplets are ejected from the tip of the ink guide by the application of voltage to the control electrode, recording can be performed stably for a long period of time, since the replenishment of charged particles by the circulation of the ink and the meniscus stability at the ejecting position can be compatible. Further in the system, since the exposure of the ink to the air is limited only to the ejecting opening, evaporation of the solvent is inhibited and physical characteristics of the ink are stabilized, so that the system can be very preferably used in the invention.

An example of the structure of an ink jet recording apparatus suitable to use the ink composition of the invention is described below.

In the first place, the outline of the apparatus of performing four-color printing on one side of a recording medium shown in Fig. 1 is described. Ink jet recording apparatus 1 shown in Fig. 1 is equipped with jet head 2 comprising jet heads 2C, 2M, 2Y and 2K of four colors for performing full color image formation, ink circulatory system 3 for feeding inks to jet head 2 and recovering inks from jet head 2, head driver 4 for driving jet head 2 by the output of the outside apparatus such as a computer and RIP not shown, and position controlling means 5. Ink jet recording apparatus 1 is further equipped with carrier belt 7 stretching on three rollers 6A, 6B and 6C, carrier belt position detecting means 8 consisting of an optical sensor and the like capable of detecting the position of carrier belt 7 in the width direction, electrostatic suction means 9 for maintaining recording medium P on carrier belt 7, and destaticizing means 10 and mechanical means 11 for peeling away recording medium P from carrier belt 7 after conclusion of image formation. Feed roller 12 and guide 13 for feeding recording medium P from a stocker not shown to carrier belt 7, and fixing means 14 and guide 15 for fixing the inks on recording medium P after being peeled and carrying the recording medium to a stocker of discharged paper not shown are arranged on the upstream and the downstream of carrier belt 7. In the inside of ink jet recording apparatus 1 are arranged recording medium position-detecting means 16 at the counter position to jet head 2 with carrier belt 7 between, exhaust fan 17 for recovering the vapor of the solvent occurring from the ink composition, and a solvent recovery part comprising solvent vapor adsorbing material 18, and the vapors in the inside of the apparatus are exhausted through the recovery part.

As feed rollers 12, well-known rollers can be used, and feed rollers 12 are arranged so that the feeding ability to recording medium P is increased. It is preferred to remove dirt and paper powder adhered on recording medium P. Recording medium P fed by feed rollers 12 is carried to carrier belt 7 through guide 13. The back surface of carrier belt 7 (preferably a metal back surface) is provided via roller 6A. The recording medium carried is electrostatically adsorbed on the carrier belt by electrostatic suction means 9. In Fig. 1, electrostatic suction is performed by a Scorotron charger connected to negative high voltage power supply. The recording medium is electrostatically sucked on carrier belt 7 without floatation by electrostatic suction means 9 and, at the same time, the surface of the recording medium is uniformly charged. The electrostatic suction means is also utilized as a charging means of recording medium P here, but a charging means may be provided separately. Charged recording medium P is carried to the jet head part by means of carrier belt 7, and electrostatic ink jet image formation is performed by piling recording signal voltage with charged potential as bias.

Image-recorded recording medium P is destaticized by destaticizing means 10, peeled away from carrier belt 7 by mechanical means 11, and carried to the fixing part. Peeled recording medium P is carried to image fixing means 14 and fixed. The fixed recording medium P is discharged to a stocker of discharged paper not shown through guide 15. The ink jet recording apparatus is also equipped with a recovery means of the vapor of the solvent occurring from an ink composition. The recovery means comprises solvent vapor adsorbing material 18, the air containing the solvent vapor in the apparatus is introduced into the adsorbing material by exhaust fan 17, and the vapor is recovered by adsorption and exhausted out of the apparatus. The ink jet recording apparatus is not limited to the above example, and the number, shape, relative arrangement and charge polarity of constitutional devices, e.g., rollers and a charger can be arbitrarily selected. Four-color imaging is described in the above system, but the system may be a more multicolored system in combination with light-colored inks and special inks.

The ink jet recording apparatus used in the above ink jet printing method has jet head 2 and ink circulatory system 3, and ink circulatory system 3 may further comprises an ink tank, an ink circulating unit, an ink concentration controlling unit and an ink temperature controlling unit, and the ink tank may contain a stirrer.

As jet head 2, a single channel head, a multi-channel head or a full line head can be used, and main scanning is performed by the rotation of carrier belt 7.

An ink jet head preferably used in the invention is an ink jet method to perform ink ejection by increasing the concentration of ink in the vicinity of the opening by the electrophoresis of charged particles in an ink channel. This method performs ejection of ink droplets by electrostatic suction force mainly originating in the recording medium or the counter electrodes arranged in the rear of the recording medium. Accordingly, even when the recording medium or the counter electrodes do not counter the head, or when voltage is not applied to the recording medium or the counter

electrodes although they are positioned countering to the head, ink droplets are not ejected and the inside of the apparatus does not become dirty even if voltage is applied to the ejecting electrode or vibration is given by error.

The jet heads preferably used in the above ink jet recording apparatus is shown in Figs. 2 and 3. As shown in Figs. 2 and 3, ink jet head 70 comprises electrical insulating substrate 74 constituting the upper wall of ink channel 72 forming one way ink flow Q, and a plurality of ejecting parts 76 ejecting ink droplets toward recording medium P. Ink guide part 78 to guide ink droplets G flying from ink channel 72 to recording medium P is provided in each ejecting part 76, openings 75 in each of which ink guide part 78 is built are formed on substrate 74, and ink meniscus 42 is formed between ink guide part 78 and the inner wall of opening 75. The gap d between ink guide part 78 and recording medium P is preferably from 200 to 1,000 μm or so. Ink guide part 78 is fixed on supporting bar 40 at the lower side.

Substrate 74 has insulating layer 44 electrically insulating two ejecting electrodes by separating at a prescribed space, first ejecting electrode 46 formed on the upper side of insulating layer 44, insulating layer 48 covering first ejecting electrode 46, guard electrode 50 formed on the upper side of insulating layer 48, and insulating layer 52 covering guard electrode 50. In addition, substrate 74 has second ejecting electrode 56 formed on the lower side of insulating layer 44, and insulating layer 58 covering second ejecting electrode 56. Guard electrode 50 is provided to prevent the electric fields of the contiguous ejecting parts from being influenced by the voltage applied to first ejecting electrode 46 and second ejecting electrode 56.

Ink jet head 70 comprises floating conductive plate 62 in an electrically floating state. Floating conductive plate 62 constitutes the bottom of ink channel 72 and, at the same time, migrates upward (i.e., toward the side of a recording medium) ink particles (charged particles) R in ink channel 72 positively charged by induced voltage steadily generating by the pulse-like jet voltage applied to first ejecting electrode 46 and second ejecting electrode 56. Further, insulating covering film 64 is formed on the surface of floating conductive plate 62 to whereby prevent the physical properties and the composition of ink from becoming labile by the application of electric charge to the ink, etc. The electric resistance of the electrical insulating covering film is preferably $10^{12}\Omega\cdot$cm or more, more preferably $10^{13}\Omega\cdot$ cm or more. It is preferred that the insulating covering film is anticorrosive to ink, by which floating conductive plate 62 is prevented from being corroded by ink. Floating conductive plate 62 is covered with insulating member 66 from the down side. Floating conductive plate 62 is completely electrically insulated by this constitution.

Floating conductive plate 62 is present one or more per one head unit (for example, in the case where there are four heads of C, M, Y and K, each head has one floating conductive plate, and there is no case where C and M head units have a common floating conductive plate).

As shown in Fig. 3, for recording on recording medium P by jetting ink droplets from ink jet head 70, ink flow Q is generated by circulating the ink in ink channel 72, and prescribed voltage (e.g., +100 V) is applied to guard electrode 50. Further, positive voltage is applied to first ejecting electrode 46, second ejecting electrode 56 and recording medium P (when gap d is 500 μm, to form the potential difference of from 1 to 3.0 kV or so is a standard) so as to form jetting electric field among first ejecting electrode 46, second ejecting electrode 56 and recording medium P by which positively charged particles R in ink droplets G guided by ink guide part 78 and jetted from opening 75 are attracted to recording medium P.

When pulse voltage is applied to first ejecting electrode 46 and second ejecting electrode 56 in this state according to image signal, ink droplets G heightened in concentration of charged particles are ejected from opening 75 (for example, when the initial charged particle concentration is from 3 to 15%, the charged particle concentration of ink droplets G becomes 30% or more).

At that time, the values of voltage applied to first ejecting electrode 46 and second ejecting electrode 56 are in advance adjusted so that ink droplets G are ejected only when pulse voltages are applied to both first ejecting electrode 46 and second ejecting electrode 56.

Thus when positive pulse voltages are applied, ink droplets G are guided by ink guide part 78 and jetted from opening 75 and adhered to recording medium P, at the same time, positive induced voltage is generated in floating conductive plate 62 by positive voltages applied to first ejecting electrode 46 and second ejecting electrode 56.

Even if the voltages applied to first ejecting electrode 46 and second ejecting electrode 56 are pulse voltages, the induced voltage is almost steady voltage. Accordingly, positively charged particles R in ink channel 72 get a force to be migrated upward by the electric field formed among floating conductive plate 62, guard electrode 50 and recording medium P, so that the concentration of charged particles R becomes high in the vicinity of substrate 74. As shown in Fig. 3, when many ejecting parts (that is, channels for ejecting inks) are used, the number of charged particles necessary for ejection increases, but the number of first ejecting electrode 46 and second ejecting electrode 56 used increases, so that the induced voltage induced by floating conductive plate 62 becomes high, as a result the number of charged particles R migrating toward the recording medium also increases.

In the above, the example of positively charged colored particles is described, but colored particles may be negatively charged. In that case, the above charge polarities are all inversed polarities.

In the present invention, it is preferred to fix inks by an appropriate heating means after ink ejection to a recording medium. As heating means, a contact type heating apparatus, e.g., a heat roller, a heat block and belt heating,

and a non-contact type heating apparatus, e.g., a drier, an infrared lamp, a visible ray lamp, an ultraviolet lamp, and a hot air oven can be used. These heating apparatus are preferably linking and integrated with an ink jet recording apparatus. The temperature of a recording medium at fixing time is preferably in the range of from 40 to 200°C for easiness of fixation. The fixing time is preferably in the range of from 1 μsec. to 20 sec. Replenishment of ink composition:

In an ink jet recording system utilizing electrostatic field, the charged particles in an ink composition are ejected in a concentrated state. Accordingly, when the ejection of an ink composition is performed for hours, the charged particles in the ink composition are reduced and the electric conductivity of the ink composition lowers. Further, the proportion of the electric conductivity of the charged particles and the electric conductivity of the ink composition changes. In addition, since charged particles having greater particle sizes are liable to be ejected prior to charged particles having smaller particle sizes, the average diameter of charged particles becomes small. Further, the amount of the solids content in the ink composition changes, so that the coefficient of viscosity also changes.

As a result of the fluctuation of the values of physical properties, jetting failure, the reduction of the optical density of recorded images and bleeding of inks occur. Therefore, by replenishing an ink composition for replenishment having higher concentration (higher in the solids content concentration) than an ink composition for initial charge in an ink tank, the reduction of the concentration of charged particles can be prevented, and the electric conductivity of the ink composition can be maintained in a constant range. Further, the average particle size and the coefficient of viscosity can also be maintained. Moreover, ink ejection can be performed for long hours stably by maintaining the values of physical properties of an ink composition in constant ranges. It is preferred to perform replenishment at this time mechanically or manually by detecting the values of physical properties such as electric conductivity and optical density of the ink solution in use and computing the ullage.

Replenishment may also be performed mechanically or manually by computing the amount of ink composition to be used on the basis of the image data.

Recording medium:

A variety of recording media can be used in the invention according to purposes. For example, by using papers, plastic films, metals, papers laminated or deposited with plastics or metals, and plastic films laminated or deposited with metals, directly printed products can be obtained by ink jet recording. In addition, an offset printing plate can be obtained by using a surface-roughened metal support such as aluminum. Further, by using plastic supports, color filters for a flexo printing plate and a liquid crystal display. The shapes of recording media may be sheet-like planar shape or may be three dimensional as cylindrical shape. When a silicone wafer and a wiring substrate are used as recording media, the invention can be applied to the manufacture of semiconductor and printed wiring boards.

## EXAMPLE

The invention will be described in detail with referring to examples, but the invention is not limited thereto.

### EXAMPLE 1

Materials used:

The following materials were used in Example 1. · Cyan pigment (a coloring material): a phthalocyanine pigment, C.I. Pigment Blue (15:3) (LIONOL BLUE FG-7350, manufactured by Toyo Ink Mfg. Co., Ltd.)

- Covering agent (AP-1)
- Dispersant (BZ-2)
- Charge adjustor (CT-1)
- Dispersion medium, Isopar G (manufactured by Exxon)

The structures of covering agent (AP-1), dispersant (BZ-2) and charge adjustor (CT-1) are shown below.

[AP-1] 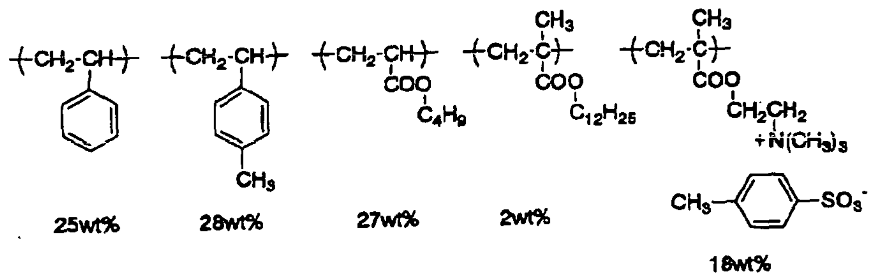

[BZ-2] 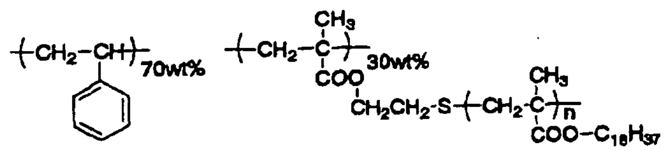

[CT-1] 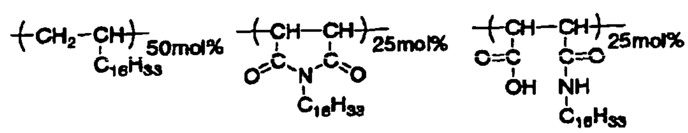

Covering agent (AP-1) was obtained by radical polymerizing styrene, 4-methylstyrene, butyl acrylate, dodecyl methacrylate and 2-(N,N-dimethylamino)ethyl methacrylate with a well-known polymerization initiator, and further reacting with methyl tosylate.

(AP-1) has a weight average molecular weight of 15, 000, the degree of polydispersion (weight average molecular weight/number average molecular weight) of 2.7, a glass transition point (a mid point) of 51°C, and a softening point of 46°C by a strain gauge method.

Dispersant (BZ-2) was obtained by radical polymerizing stearyl methacrylate in the presence of 2-mercaptoethanol, and further reacting with methacrylic anhydride to obtain a stearyl methacrylate polymer having methacryloyl groups at terminals (weight average molecular weight: 7,600), and radical polymerizing the stearyl methacrylate polymer and styrene. The weight average molecular weight of (BZ-2) was 110,000.

Charge adjustor (CT-1) was obtained by reacting a copolymer of 1-octadecene and maleic anhydride with 1-hexadecylamine. (CT-1) has a weight average molecular weight of 17,000.

Manufacture of ink composition [DC-1]:

Ten (10) grams of a cyan pigment and 20 g of covering agent (AP-1) were put in a bench kneader PBV-0.1 (manufactured by Irie Shokai Co.), and mixed with heating for 2 hours after setting the temperature of heater at 100°C. The obtained mixture (30 g) was coarsely pulverized in a Trio-Blender (manufactured by Trio Science Co., Ltd.), and further finely pulverized with an SK-M10 type sample mill (manufactured by Kyoritsu Rikoh Co., Ltd.). The obtained finely pulverized product (30 g) was preliminarily dispersed with 7.5 g of dispersant (BZ-2), 75 g of Isopar G and glass beads having a diameter of about 3.0 mm with a paint shaker (manufactured by Toyo Seiki Seisaku-Sho, Ltd.). After removing the glass beads, the preliminarily dispersed product was dispersed (was made particles) with zirconia ceramic beads having a diameter of about 0.6 mm in Type KDL DYNO-MILL (manufactured by Shinmaru Enterprises Corporation) with maintaining the inner temperature at 30°C for 3 hours at an engine speed of 2,000 rpm. The volume average particle size of the particles at this time measured with CAPA-700 (manufactured by Horiba, Ltd.) was 0.5 μm. The zirconia ceramic beads were removed from the obtained dispersion, and the dispersion was added to a vessel equipped with a stirrer and a heater with 316 g of Isopar G and 0.6 g of charge adjustor (CT-1) and stirred with heating at 45°C for 1 hour and further 50°C for 3 hours, whereby ink composition (DC-1) was obtained. The concentration of the solids content of (DC-1) was 9 weight% (dried on a hot plate at 145°C for 2 hours, and computed from the weight change).

The physical properties of ink composition (DC-1) were as follows.

The electric conductivity of (DC-1) at 20°C measured with an LCR meter (AG-4311, manufactured by Ando

Electric Co., Ltd.) and electrodes for liquid (LP-05 type, manufactured by Kawaguchi Electric Works Co., Ltd.), and conditions of applied voltage of 5 V and frequency of 1 kHz was 90 nS/m. The electric charge of the charged particles was positive.

The volume average particle diameter of the charged particles measured with CAPA-700 (manufactured by HORIBA LTD.) was 1.0 μm. The coefficient of viscosity of the ink composition at 20°C measured with an E-type viscometer (manufactured by Tokyo Keiki Co) was 1.5 mPa·s. The redispersibility was 85%.

Ink composition (DC-1) (100 g) was filled in the ink tank linking with the head of the ink jet apparatus shown in Figs. 1 to 3. As the jet head, 150 dpi (three-row zigzag layout of channel density of 50 dpi) of the type as shown in Fig. 2, 833 channel heads, and as the fixing means, a 1 kW heater built-in type silicone rubber heat roller were used. As the temperature controlling means, an immersion heater and stirring blades were provided in the ink tank, ink temperature was set at 30°C, and the temperature was controlled with a thermostat with rotating the stirring blades at 30 rpm. The stirring blades were also used as a stirring means to prevent precipitation and agglomeration. As the recording medium, A2-size fine coat paper for offset printing was used. The dust on the surface of the recording medium was removed by air pump suction, and then the jet heads were approached to the image-forming position of the recording medium, the image data to be recorded were transmitted to the arithmetic control unit of image data, the jet heads were gradually moved with carrying the recording medium by the rotation of the carrier belt and ejecting the ink composition, and an image was formed by 2,400 dpi imaging resolution. As the carrier belt, a metal belt laminated with a polyimide film was used. A linear marker was arranged at one end of the belt along the carrying direction, and the marker was read optically by a carrier belt-detecting means, and by driving a position controlling means, an image was formed. At this time, the distance between the jet heads and the recording medium was maintained at 0.5 mm by the output by an optical gap detecting unit. The surface potential of the recording medium was set at -1.5 kV at the time of ejection, pulse voltage of +500 V (pulse width of 50 μsec) was applied in performing ejection, and the image was formed at driving frequency of 10 kHz.

Immediately after image recording, the image was fixed with a heat roller. The temperature of the coat paper at fixing time was 90°C, and the contact time with the heat roller was 0.3 sec.

Image recording was performed on the conditions of an image area rate of 15% and recording of 15 sheets of A4 size paper per a day for 1 week, and whether the particles were adhered on the ejecting opening of ink jet head or not was examined.

The ink composition was allowed to stand at room temperature for 1 month, and a precipitate was examined.

The results obtained are shown in Table 1 below.

COMPARATIVE EXAMPLE 1

Manufacture of ink composition (RC-1):

Ink composition (RC-1) was manufactured in the same manner as in Example 1 except that dispersing was finished in 1 hour and stirring with heating after the dispersion process was not performed, and the obtained composition was evaluated. The results are shown in Table 1 below.

The electric conductivity of the ink composition was 100 nS/m, the volume average particle size was 1.0 μm, the coefficient of viscosity was 1.6 mPa·s, and the redispersibility was 20%.

TABLE 1

| | Example 1 | Comparative Example 1 |
|---|---|---|
| Ink Composition | (DC-1) | (RC-1) |
| Ink ejection for 1 week | Clogging of ejecting opening was not observed and showed good result. | The particles of ink were adhered on the ejecting opening, which resulted in clogging and ejection was impossible. |
| Preservation for 1 month | The particles precipitated but the precipitate disappeared by stirring. | The particles precipitated. The precipitate was left intact even with stirring. |

EXAMPLE 2

Ink composition (DM-1) was manufactured in the same manner as in Example 1 except that the pigment was changed to C.I. Pigment Red 57:1 (Brilliant Carmine 6B, L.R. 6B FG-4213, manufactured by Toyo Ink Mfg. Co., Ltd.). The results are shown in Table 2 below.

EXAMPLE 3

Ink composition (DY-1) was manufactured in the same manner as in Example 1 except that the pigment was changed to C.I. Pigment Yellow 74 (Hanza Brilliant Yellow 5GXB, manufactured by Clariant Japan K.K.). The results are shown in Table 2 below.

EXAMPLE 4

Ink composition (DK-1) was manufactured in the same manner as in Example 1 except that the pigment was changed to C.I. Pigment Black 7 (carbon black, MA-100, manufactured by Mitsubishi Chemical Corporation). The results are shown in Table 2.

TABLE 2

| | Example 2 | Example 3 | Example 4 |
|---|---|---|---|
| Ink Composition | (DM-1) | (DY-1) | (DK-1) |
| Volume average particle size after dispersing process | 0.6 μm | 0.5 μm | 0.3 μm |
| Volume average particle size after heating process | 1.4 μm | 1.2 μm | 0.9 μm |
| Redispersibility | 70% | 80% | 95% |
| Ink ejection for 1 week | Clogging of ejecting opening was not observed and showed good result. | | |
| Preservation for 1 month | The particles precipitated but the precipitate disappeared by stirring. | | |

COMPARATIVE EXAMPLES 2 TO 4

Ink compositions (RM-1), (RY-1) and (RK-1) were manufactured in the same manner as in Examples 2, 3 and 4 respectively except that dispersion was finished in 1 hour and stirring with heating after dispersion process was not performed. The results are shown in Table 3 below.

TABLE 3

| | Comparative Example 2 | Comparative Example 3 | Comparative Example 4 |
|---|---|---|---|
| Ink Composition | (RM-1) | (RY-1) | (RK-1) |
| Volume average particle size after dispersing process | 1.5 μm | 1.3 μm | 0.8 μm |
| Redispersibility | 10% | 20% | 25% |
| Ink ejection for 1 week | The particles of ink were adhered on the ejecting opening, which resulted in clogging and ejection was impossible. | | |
| Preservation for 1 month | The particles precipitated. The precipitate was left intact even with stirring. | | |

EXAMPLE 5

2-Phenoxyethyl acrylate, methyl methacrylate and 2-(N,N-dimethylamino)ethy methacrylate (weight ratio: 30/60/10) was made quaternary with methyl tosylate, and the obtained quaternary compound was polymerized by using a well-known polymerization initiator, thus copolymer (AP-2) was obtained. The weight average molecular weight of (AP-2) was 25,000, the degree of polydispersion was 2.5, the glass transition point was 45°C, and softening point was 40°C. Manufacture of ink composition (DC-2):

Ten (10) grams of a cyan pigment and 20 g of covering agent (AP-2) were put in a bench kneader PBV-0.1 (manufactured by Irie Shokai Co.), and mixed with heating for 2 hours after setting the temperature of heater at 100°C. The obtained mixture (30 g) was coarsely pulverized in a Trio-Blender (manufactured by Trio Science Co., Ltd.), and further finely pulverized with an SK-M10 type sample mill (manufactured by Kyoritsu Rikoh Co., Ltd.). The obtained finely pulverized product (30 g) was preliminarily dispersed with 7.5 g of dispersant (BZ-2), 75 g of Isopar G and glass

beads having a diameter of about 3.0 mm with a paint shaker (manufactured by Toyo Seiki Seisaku-Sho, Ltd.). After removing the glass beads, the preliminarily dispersed product was dispersed (was made particles) with zirconia ceramic beads having a diameter of about 0.6 mm in Type KDL DYNO-MILL (manufactured by Shinmaru Enterprises Corporation) with maintaining the inner temperature at 25°C for 4 hours at an engine speed of 2,000 rpm. The volume average particle size of the particles at this time measured with CAPA-700 (manufactured by Horiba, Ltd.) was 0.4 μm. The zirconia ceramic beads were removed from the obtained dispersion, and the dispersion was added to a vessel equipped with a stirrer and a heater with 316 g of Isopar G and 0.6 g of charge adjustor (CT-1) and stirred with heating at 40°C for 1 hour, at 45°C for 1 hour, and further at 50°C for 1 hour, whereby ink composition (DC-2) was obtained. The concentration of the solids content of (DC-2) was 9 weight% (dried on a hot plate at 145°C for 2 hours, and computed from the weight change).

The physical properties of ink composition (DC-2) were as follows.

The electric conductivity of (DC-2) at 20°C measured with an LCR meter (AG-4311, manufactured by Ando Electric Co., Ltd.) and electrodes for liquid (LP-05 type, manufactured by Kawaguchi Electric Works Co., Ltd.), and conditions of applied voltage of 5 V and frequency of 1 kHz was 100 nS/m. The electric charge of the charged particles was positive.

The volume average particle diameter of the charged particles measured with CAPA-700 (manufactured by HORIBA LTD.) was 1.0 μm. The coefficient of viscosity of the ink composition at 20°C measured with an E-type viscometer (manufactured by Tokyo Keiki Co) was 1.5 mPa·s. The redispersibility was 80%.

Ink composition (DC-2) was evaluated in the same manner as in Example 1. The results are shown in Table 4 below.

COMPARATIVE EXAMPLE 5

Manufacture of ink composition (RC-2):

Ink composition (RC-2) was manufactured in the same manner as in Example 5 except that dispersing was finished in 1 hour and stirring with heating after dispersing process was not performed.

The electric conductivity of ink composition (RC-2) was 110 nS/m, the volume average particle size was 1.1 μm, the coefficient of viscosity was 1.6 mPa·s, and the redispersibility was 10%.

Ink composition (DC-2) was evaluated in the same manner as in Example 1. The results obtained are shown in Table 4 below.

TABLE 4

| | Example 5 | Comparative Example 5 |
|---|---|---|
| Ink Composition | (DC-2) | (RC-2) |
| Ink ejection for 1 week | Clogging of ejecting opening was not observed and showed good result. | The particles of ink were adhered on the ejecting opening, which resulted in clogging and ejection was impossible. |
| Preservation for 1 month | The particles precipitated but the precipitate disappeared by stirring. | The particles precipitated. The precipitate was left intact even with stirring. |

The invention can provide particles that are inhibited from interacting among themselves and hardly adhere to the nozzle of ink jet head of ink jet recording apparatus and can also improve the preservation stability when used, for example, as the component of the composition of ink for ink jet recording, a method for manufacturing the particles and an ink composition.

The entire disclosure of each and every foreign patent application from which the benefit of foreign priority has been claimed in the present application is incorporated herein by reference, as if fully set forth.

## Claims

**1.** A method for manufacturing particles containing a coloring material and a polymer, the method comprising:

dispersing a mixture of the coloring material and the polymer with beads for dispersion, so as to form fine particles; and
heating the fine particles after removing the beads for dispersion, so as to increase particle sizes of the fine

particles.

**2.** The method for manufacturing particles according to claim 1,
wherein a volume average particle size of the fine particles after finishing the dispersing is less than 0.7 μm, and a volume average particle size of the particles after finishing the heating is from 0.7 to 5.0 μm.

**3.** The method for manufacturing particles according to claim 1,
wherein a volume average particle size of the particles after finishing the heating is 1.2 times or more than a volume average particle size of the fine particles after finishing the dispersing.

**4.** Particles containing a coloring material and a polymer,
wherein a redispersibility of the particles in a dispersion medium is in a range of from 50 to 100%.

**5.** An ink composition comprising particles containing a coloring material and a polymer dispersed in a dispersion medium,
wherein a redispersibility of the particles in the dispersion medium is in a range of from 50 to 100%.

FIG. 1

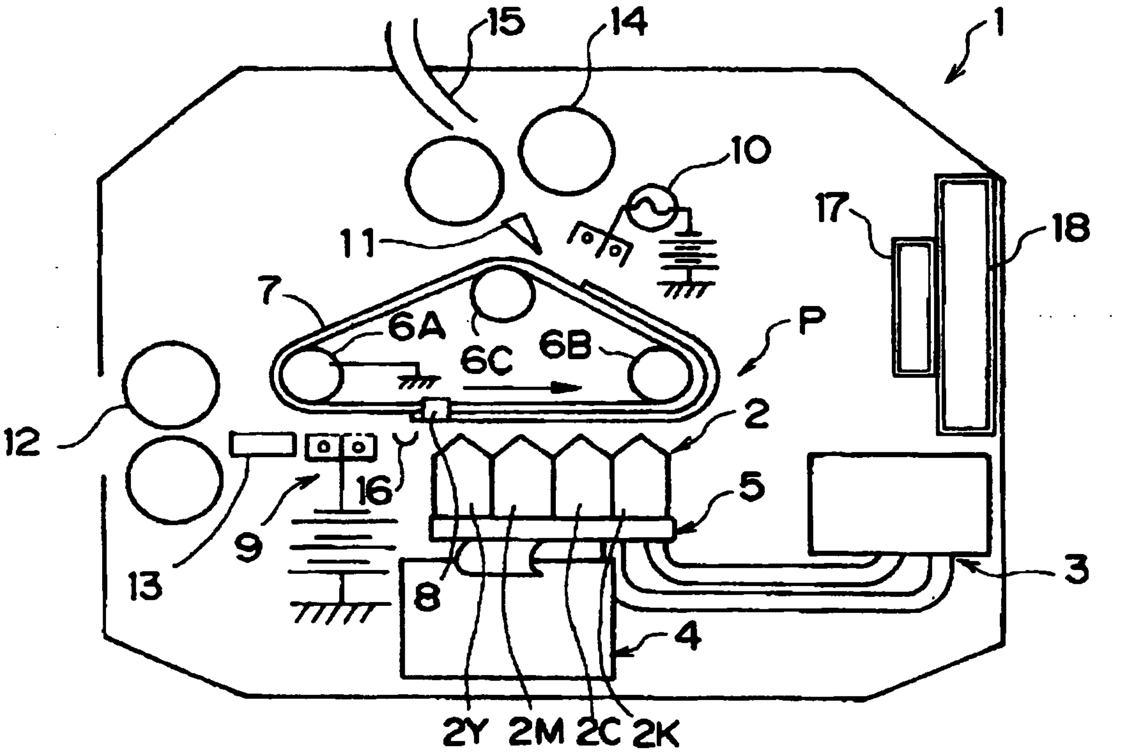

FIG. 2

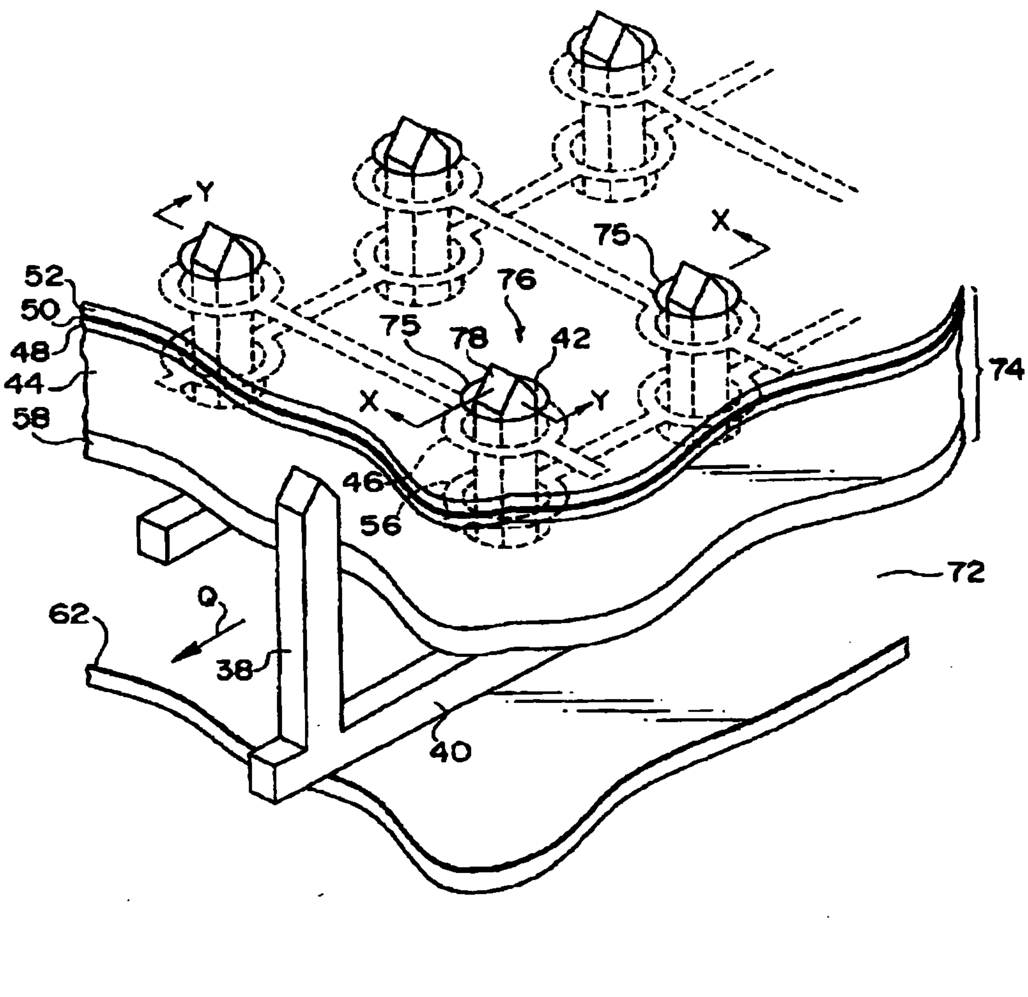

FIG. 3

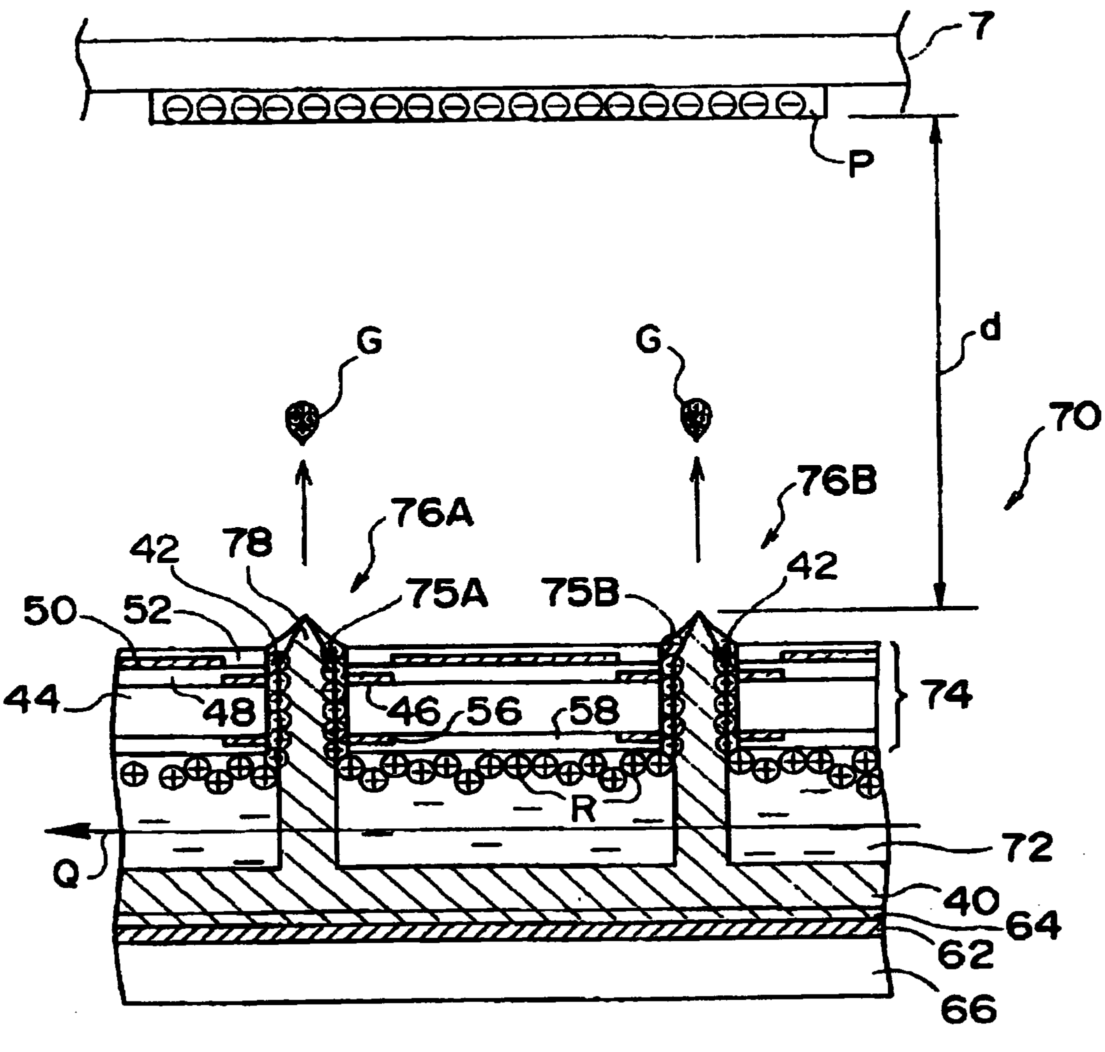
7
P
d
G
G
70
76B
76A
78
42
42
75A
75B
50
52
74
44
48
46
56
58
R
Q
72
40
64
62
66

European Patent Office

# EUROPEAN SEARCH REPORT

Application Number
EP 05 01 2127

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 787 777 A (NIPPON SHOKUBAI CO., LTD) 6 August 1997 (1997-08-06) * page 7, lines 39-43; examples * ----- | 1-5 | C09D11/00 B41M5/00 |
| X | EP 1 085 061 A (CANON KABUSHIKI KAISHA) 21 March 2001 (2001-03-21) * example 3 * ----- | 1-5 | |
| X | EP 1 291 397 A (SEIKO EPSON CORPORATION) 12 March 2003 (2003-03-12) * paragraph [0073]; examples * ----- | 4,5 | |
| A | US 2003/078320 A1 (YATAKE MASAHIRO) 24 April 2003 (2003-04-24) * paragraphs [0098], [0099] * ----- | 1-5 | |

TECHNICAL FIELDS SEARCHED (Int.Cl.7)
C09D
B41M

The present search report has been drawn up for all claims

3

| Place of search | Date of completion of the search | Examiner |
|---|---|---|
| Munich | 15 September 2005 | Ellrich, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 01 2127

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2005

| Patent document cited in search report | Publication date | Patent family member(s) | Publication date |
|---|---|---|---|
| EP 0787777 A | 06-08-1997 | WO 9700295 A1 | 03-01-1997 |
| | | KR 267191 B1 | 01-11-2000 |
| | | US 5952429 A | 14-09-1999 |
| EP 1085061 A | 21-03-2001 | CN 1295100 A | 16-05-2001 |
| | | JP 2001152060 A | 05-06-2001 |
| | | US 6511534 B1 | 28-01-2003 |
| EP 1291397 A | 12-03-2003 | WO 0194482 A1 | 13-12-2001 |
| | | US 2003097961 A1 | 29-05-2003 |
| US 2003078320 A1 | 24-04-2003 | CN 1396945 A | 12-02-2003 |
| | | EP 1321495 A1 | 25-06-2003 |
| | | WO 0226898 A1 | 04-04-2002 |

EPO FORM P0459

For more details about this annex : see Official Journal of the European Patent Office, No. 12/82